# EUROPÄISCHE PATENTANMELDUNG

(11) **EP 2 713 077 A2**
(43) Veröffentlichungstag der Anmeldung: **02.04.2014**
(21) Anmeldenummer: 13002208.0
(22) Anmeldetag: 26.04.2013
(51) Int. Cl.: F16F 1/24

(54) **Schutzeinrichtung für eine Mehrblattfeder**

(30) Priorität: 27.09.2012 AT 10522012
(71) Anmelder: MAN Truck & Bus Österreich AG, 4400 Steyr (AT)
(72) Erfinder: Leutgeb, Thomas, 3351 Weistrach (AT)

(57) **Zusammenfassung**

Die Erfindung betrifft eine Schutzeinrichtung (1) für eine Mehrblattfeder (100) mit zwei Mehrblattfederarmen (101, 102). Die Schutzeinrichtung (1) zeichnet sich dadurch aus, dass sie eine Schutzhülle (2) umfasst, die einen Aufnahmeraum zur Aufnahme eines Mehrblattfederarms (101, 102) aufweist und dazu dient, zumindest einen Zwischenraum (Z) zwischen zumindest zwei Federelementen (F) des Mehrblattfederarms (101, 102) gegen Schmutz und/oder Wasser abzuschirmen.

## Beschreibung

Die Erfindung betrifft eine Schutzeinrichtung für eine Mehrblattfeder, vorzugsweise für ein Nutzfahrzeug, insbesondere einen Lastkraftwagen oder ein Baustellenfahrzeug.

Mehrblattfedern für Nutzfahrzeuge sind aus dem Stand der Technik bekannt. Sie umfassen ein Mittelteil, das mittels einer Spannplatte und Spannbügeln zu beaufschlagen ist, und zwei Mehrblattfederarme, die sich von dem Mittelteil in entgegengesetzte Richtungen erstrecken. Die Mehrblattfederarme umfassen mehrere Federelemente (z.B. Federblätter), zwischen denen ein oder mehrere Zwischenräume ausgebildet sind. Insbesondere bei Baustellenfahrzeugen, aber auch Straßenfahrzeugen allgemein ist die Gefahr der Verschmutzung der Mehrblattfederarme groß. Vor allem besteht die Gefahr, dass Wasser und/oder Schmutz die Zwischenräume kontaminiert, was die Funktion der Mehrblattfedern beeinträchtigen kann, insbesondere die Reibung zwischen den Federelementen erhöhen kann. Der Aufwand, die Zwischenräume zu reinigen ist groß.

Eine Aufgabe der Erfindung ist es, eine Möglichkeit zu schaffen, eine durch Schmutz und/oder Wasser erzeugte Funktionsbeeinträchtigung von Mehrblattfedern für Nutzfahrzeuge zu verhindern.

Diese Aufgabe kann durch die Merkmale des Hauptanspruchs gelöst werden. Vorteilhafte Weiterbildungen sind den Unteransprüchen zu entnehmen.

Erfindungsgemäß wird eine Schutzeinrichtung für eine Mehrblattfeder, vorzugsweise für ein Nutzfahrzeug, insbesondere einen Lastkraftwagen oder ein Baustellenfahrzeug, geschaffen. Die Mehrblattfeder kann z.B. parabel- oder trapezförmig ausgeführt sein. Die Mehrblattfeder umfasst zwei Mehrblattfederarme, die sich von einem Mittelteil der Mehrblattfeder in entgegengesetzte Richtungen erstrecken. Das Mittelteil dient zweckmäßig dazu, von einem Federspannbügel und einer Federspannplatte beaufschlagt zu werden. Die Mehrblattfederarme umfassen jeweils zumindest zwei Federelemente (z.B. Federblätter), zwischen denen zumindest ein Zwischenraum ausgebildet ist.

Die Schutzeinrichtung zeichnet sich insbesondere dadurch aus, dass sie eine Schutzhülle mit einem Aufnahmeraum zur Aufnahme zumindest eines Mehrblattfederarms aufweist, die dazu dient, den oder die Zwischenräume zwischen den Federelementen des Mehrblattfederarms gegen Schmutz und/oder Wasser abzuschirmen. Der Aufnahmeraum kann im Rahmen der Erfindung zur zumindest abschnittsweisen Aufnahme, zur Aufnahme eines Großteils oder gar eines gesamten Mehrblattfederarms ausgeführt sein. Im Rahmen der Erfindung ist es ebenso möglich, die Schutzhülle zur Aufnahme der im Wesentlichen ganzen Mehrblattfeder auszugestalten.

Es ist möglich, dass die Schutzhülle zum Ummanteln des Außenumfangs des Mehrblattfederarms ausgebildet ist.

Vorzugsweise ist die Schutzhülle zur passgenauen Aufnahme des Mehrblattfederarms ausgebildet, wodurch zweckmäßig ermöglicht werden kann, dass die Schutzhülle zumindest relativ eng an dem Mehrblattfederarm anbringbar ist.

Es ist sogar möglich, dass die Schutzhülle aus einem elastischen Material gebildet wird und/oder zum Aufspannen auf den Mehrblattfederarm ausgebildet ist. Dadurch kann z.B. ermöglicht werden, dass sich die Schutzhülle an dem Mehrblattfederarm zusammenzieht und sich so an den Mehrblattfederarm anschmiegen kann.

Im Rahmen der Erfindung ist es aber ebenso möglich, dass die Schutzhülle aus zwei Halbschalen gebildet wird, die vorzugsweise formfest ausgebildet sind.

Die Schutzhülle ist zweckmäßig mit einer Öffnung versehen, mittels der die Schutzhülle über den Außenumfang des Mehrblattfederarms herum positioniert werden kann, und einem Schließmittel zum Schließen und/oder Öffnen der Öffnung.

Die Öffnung und/oder das Schließmittel erstrecken sich vorzugsweise im Wesentlichen in Längsrichtung der Schutzhülle, vorzugsweise von einem Längsseitenende der Schutzhülle bis zu dem anderen Längsseitenende der Schutzhülle.

Das Schließmittel kann z.B. ausgeführt sein als Klettverschluss, Reißverschluss, Knopfverschluss oder Schnappverschluss.

Die Schutzhülle weist an ihren beiden Längsseitenenden jeweils eine Durchgangsöffnung auf. Die Durchgangsöffnungen dienen dazu, einen Durchtritt der Mehrblattfeder, insbesondere des Mehrblattfederarms, zu ermöglichen.

Die Schutzhülle kann mit einer ersten Festmacheinrichtung versehen sein, die zum Festmachen an einer Federspannplatte oder einem Federspannbügel ausgeführt ist und/oder einer Festmacheinrichtung, die zum Festmachen an einer Radaufhängung ausgeführt ist. Die Festmacheinrichtung(en) können z.B. als Lasche, Haken, Schnur, etc. ausgeführt sein.

Zu erwähnen ist, dass die Mehrblattfeder eine im Wesentlichen übliche, aus dem Stand der Technik bekannte Mehrblattfeder sein kann. Möglich ist allerdings, dass die an sich bekannte Mehrblattfeder mit einer Haltestruktur versehen wird, an der die Schutzeinrichtung festgemacht werden kann.

Zu erwähnen ist ferner, dass die Schutzeinrichtung vorzugsweise zur Aufnahme und zum Schutz eines Mehrblattfederarms ausgeführt ist. Im Rahmen der Erfindung sind aber auch Ausführungsformen umfasst, bei denen die Schutzeinrichtung zur Aufnahme beider Mehrblattfederarme und optional sogar dem zwischen den Mehrblattfederarmen angeordneten Mittelteil ausgeführt ist.

Außerdem ist zu erwähnen, dass die Schutzhülle vorzugsweise aus Kunststoff oder Gummi oder Latex enthaltendem Material hergestellt werden kann.

Die vorstehend beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1: zeigt eine perspektivische Ansicht einer Mehrblattfeder und einer Schutzeinrichtung gemäß einer Ausführungsform der Erfindung, und
- Figur 2: zeigt ein Fahrgestell für ein Nutzfahrzeug mit zwei Mehrblattfedern und vier Schutzeinrichtungen gemäß einer Ausführungsform der Erfindung.

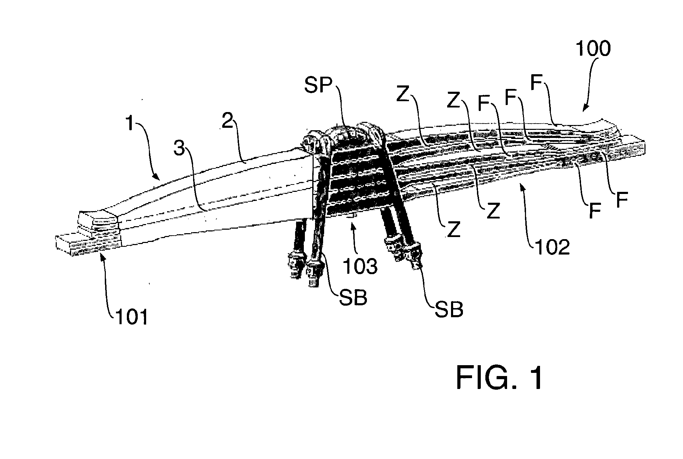

Figur 1 zeigt eine perspektivische Ansicht einer Mehrblattfeder 100 und einer Schutzeinrichtung 1 gemäß einer Ausführungsform der Erfindung. Die Mehrblattfeder 100 umfasst zwei Mehrblattfederarme 101, 102, die sich von einem Mittelteil 103 der Mehrblattfeder 100 in entgegengesetzte Richtungen erstrecken. Das Mittelteil 103 dient dazu, von einer Federspannplatte SP und zwei Federspannbügeln SB beaufschlagt zu werden. Ebenso umfassen die Mehrblattfederarme 101, 102 jeweils mehrere Federelemente (z.B. Federblätter), die einheitlich mit dem Bezugszeichen F versehen sind. Zwischen den Federelementen F sind mehrere Zwischenräume ausgeführt, die einheitlich mit dem Bezugszeichen Z versehen sind. Die Mehrblattfederarme 101, 102 umfassen jeweils fünf Federelemente F und jeweils vier Zwischenräume Z. Im Rahmen der Erfindung sind natürlich auch andere Mehrblattfederkonstruktionen möglich.

Figur 1 zeigt ferner eine Schutzeinrichtung 1, die an den Mehrblattfederarm 101 angelegt ist. Auf ähnliche Weise kann natürlich auch eine weitere Schutzeinrichtung 1 an den Mehrblattfederarm 102 angelegt werden.

Die Schutzeinrichtung 1 umfasst eine Schutzhülle 2, die einen Aufnahmeraum zur Aufnahme eines Großteils des Mehrblattfederarms 101 aufweist und die dazu dient, die Zwischenräume Z zwischen den Federelementen F gegen Schmutz und/oder Wasser abzuschirmen. Die Schutzhülle 2 umfasst ferner eine Öffnung, mittels der die Schutzhülle 2 an den Mehrblattfederarm 101 angelegt werden kann, und ein Schließmittel 3 (z.B. einen Klett- oder Reißverschluss) zum Schließen und Öffnen der Öffnung. Die Öffnung erstreckt sich im Wesentlichen in Längsrichtung der Schutzhülle 2 und zwar von dem einen Längsseitenende der Schutzhülle 2 zu dem anderen Längsseitenende der Schutzhülle 2.

Die Schutzhülle 2 ist so ausgeführt, dass sie den Außenumfang des Mehrblattfederarms 101 ummantelt. Zugleich weist die Schutzhülle 2 an ihren beiden Längsseitenenden jeweils eine Durchgangsöffnung auf, die von der Mehrblattfeder 100, insbesondere dem Mehrblattfederarm 101 durchquert wird. Die Schutzhülle 2 ist so ausgeführt, dass sie das Mittelteil 103 und das Längsseitenende des Mehrblattfederarms 101 freigelegt lässt. Dadurch kann ermöglicht werden, dass die sensiblen Bereiche des Mehrblattfederarms 101, die insbesondere durch die Zwischenräume F erzeugt werden, gegen Wasser und/oder Schmutz abgedichtet werden, zugleich aber eine einfache Montage der Schutzeinrichtung 1 an dem Mehrblattfederarm 101 ermöglicht wird und zwar auch dann, wenn die Mehrblattfeder 100 bereits verbaut ist. Zugleich führt die zuvor erwähnte Freilegung zu keiner oder keiner wesentlichen Verschlechterung des Dichtschutzes, da an dem Mittelteil 103 und dem Längsseitenende des Mehrblatttederarms 101 keine sensiblen Zwischenräume vorhanden sind, in die Schmutz oder Wasser eindringen könnte. Im Rahmen der Erfindung sind aber durchaus Ausführungsformen möglich, in denen die Schutzhülle 2 auch das Mittelteil 103 und/oder das Längsseitenende des Mehrblatttederarms 101 gegen Wasser und/oder Schmutz schützt.

Die in der Figur 1 gezeigte Schutzhülle 2 ist zur passgenauen Aufnahme des Mehrblattfederarms 101 ausgeführt und kann z.B. aus einem elastischen Material gebildet werden, wodurch sich die Schutzhülle 2 zum Aufspannen auf den Mehrblattfederarm 101 eignet und dadurch eine ganz besonders enge Aufnahme des Mehrblattfederarms durch die Schutzhülle 2 realisiert werden kann. Durch die Elastizität kann sich die Schutzhülle 2 quasi aktiv an die Form des Mehrblatttederarms 101 anpassen. Zu erwähnen ist aber, dass die Schutzhülle 2 alternativ auch aus zwei formfesten Halbschalen gebildet werden kann.

Zudem umfasst die Schutzeinrichtung 1 eine nicht gezeigte Festmacheinrichtung zum Festmachen an der Federspannplatte SP oder dem Federspannbügel SB und eine Festmacheinrichtung zum Festmachen an einer Radaufhängung, wodurch die Schutzhülle 2 in Position gehalten werden kann. Die Festmacheinrichtungen können z.B. als einfache Schnüre, Laschen oder Haken ausgeführt sein.

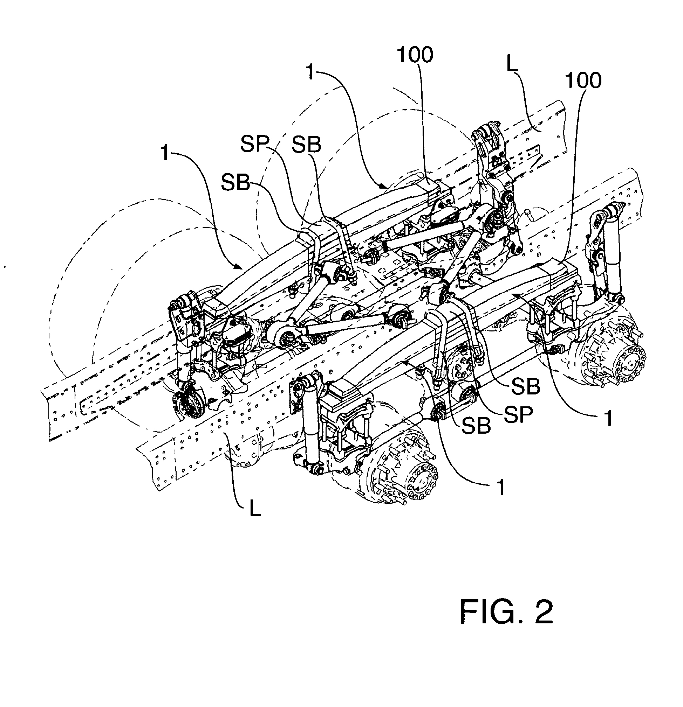

Figur 2 zeigt ein Fahrgestell für ein Nutzfahrzeug, vorzugsweise einen Lastkraftwagen oder ein Baustellenfahrzeug. Das Fahrgestell kann gemäß Stand der Technik ausgeführt sein und umfasst zwei in Querrichtung des Fahrgestells voneinander beabstandete Längsträger L, Radaufhängungen und zwei herkömmliche Mehrblattfedern 100, die gemäß Figur 1 ausgebildet sein können. Die jeweiligen sensiblen Bereiche der insgesamt vier Mehrblattfederarme der zwei Mehrblattfedern 100 sind wie unter Bezugnahme auf die Figur 1 beschrieben mittels jeweils einer Schutzeinrichtung 1 gegen Wasser und/oder Schmutz geschützt.

Die Erfindung ist nicht auf die vorstehend beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche, unabhängig von den in Bezug genommenen Merkmalen und Ansprüchen.

## Patentansprüche

1. Schutzeinrichtung (1) für eine Mehrblattfeder (100) mit zwei Mehrblattfederarmen (101, 102), **dadurch gekennzeichnet, dass** die Schutzeinrichtung (1) eine Schutzhülle (2) umfasst, die einen Aufnahmeraum zur Aufnahme eines Mehrblattfederarms (101, 102) aufweist und dazu dient, zumindest einen Zwischenraum (Z) zwischen zumindest zwei Federelementen (F) des Mehrblattfederarms (101, 102) gegen Schmutz und/oder Wasser abzuschirmen.

2. Schutzeinrichtung (1) nach Anspruch 1, **dadurch gekennzeichnet, dass** die Schutzhülle (2) zum Ummanteln des Außenumfangs des Mehrblattfederarms (101, 102) ausgebildet ist.

3. Schutzeinrichtung (1) nach Anspruch 1 oder 2, **dadurch gekennzeichnet, dass** die Schutzhülle (2) zur passgenauen Aufnahme des Mehrblattfederarms (101, 102) ausgebildet ist.

4. Schutzeinrichtung (1) nach einem der vorhergehenden Ansprüche, **dadurch gekennzeichnet, dass** die Schutzhülle (2) aus einem elastischen Material gebildet wird und/oder zum Aufspannen auf den Mehrblattfederarm (101, 102) ausgebildet ist.

5. Schutzeinrichtung (1) nach einem der Ansprüche 1 bis 3, **dadurch gekennzeichnet, dass** die Schutzhülle (2) aus zwei vorzugsweise formfesten Halbschalen gebildet wird.

6. Schutzeinrichtung (1) nach einem der vorhergehenden Ansprüche, **dadurch gekennzeichnet, dass** die Schutzhülle (2) eine Öffnung aufweist, mittels der die Schutzhülle (2) an dem Mehrblattfederarm (100) anlegbar ist, und ein Schließmittel (3) zum Schließen und/oder Öffnen der Öffnung.

7. Schutzeinrichtung (1) nach Anspruch 6, **dadurch gekennzeichnet, dass** sich die Öffnung in Längsrichtung der Schutzhülle (2) erstreckt, vorzugsweise von dem einen Längsseitenende der Schutzhülle (2) zu dem anderen Längsseitenende der Schutzhülle (2).

8. Schutzeinrichtung (1) nach Anspruch 6 oder 7, **dadurch gekennzeichnet, dass** das Schließmittel einen Klettverschluss, einen Reißverschluss, einen Knopfverschluss oder einen Schnappverschluss umfasst.

9. Schutzeinrichtung (1) nach einem der vorhergehenden Ansprüche, **dadurch gekennzeichnet, dass** die Schutzhülle (2) an ihren beiden Längsseitenenden jeweils eine Durchgangsöffnung aufweist, die dazu dienen, einen Durchtritt der Mehrblattfeder (100) zu ermöglichen.

10. Schutzeinrichtung (1) nach einem der vorhergehenden Ansprüche, **dadurch gekennzeichnet, dass** die Schutzhülle (2) mit einer Festmacheinrichtung versehen ist, die zum Festmachen an einer Federspannplatte oder einem Federspannbügel ausgeführt ist, und/oder einer Festmacheinrichtung versehen ist, die zum Festmachen an einer Radaufhängung ausgeführt ist.

11. Schutzeinrichtung (1) nach einem der vorhergehenden Ansprüche, **dadurch gekennzeichnet, dass** die Schutzhülle (2) aus Kunststoff oder Gummi oder Latex enthaltendem Material gefertigt ist.

12. Nutzfahrzeug, vorzugsweise Lastkraftwagen oder Baustellenfahrzeug, mit einem zwei Längsträger (L) umfassenden Fahrgestell, zumindest einer Mehrblattfeder (100), die sich in Längsrichtung des Fahrgestells erstreckt, und einer Schutzeinrichtung (1) nach einem der vorhergehenden Ansprüche,
